# EUROPEAN PATENT APPLICATION

(11) **EP 4 787 109 A1**
(43) Date of publication of application: **05.08.2026**
(21) Application number: 24872380.1
(22) Date of filing: 26.09.2024
(51) Int. Cl.: G05D 1/43, B65G 1/00, B65G 1/137, G01C 21/34, G08G 1/00

(54) **MAP GENERATION DEVICE, MAP GENERATION METHOD, AND MAP GENERATION SYSTEM**

(30) Priority: 28.09.2023 JP 2023168645
(71) Applicant: Muse Inc., Tokyo 104-0031 (JP)
(72) Inventor: ISHIKAWA, Kazuhiro, Tokyo 104-0031 (JP)
(74) Representative: Ziebig Hengelhaupt Intellectual Property Attorneys Patentanwaltskanzlei PartGmbB
(86) International application number: PCT/JP2024/034399
(87) International publication number: WO 2025/070595

(57) **Abstract**

A map generation device, a map generation method, and a map generation syste m capable of reducing a generation cost of a mobile body facility map used for autonomo us movement control of an autonomous mobile body are provided. The map generation d evice comprises a passage identifying unit and a mobile body facility map data generatio n unit. The passage identifying unit identifies a passage in which an autonomous mobil e body is movable in a facility by executing data processing on drawing data representin g a construction drawing of the facility. The mobile body facility map data generation u nit generates mobile body facility map data representing a mobile body facility map used for autonomous movement control of the autonomous mobile body in the facility, the mo bile body facility map including the identified passage and a point on the passage.

## Description

### Technical Field

The present invention relates to a map generation device, a map generation meth od, and a map generation system.

### Background Art

Conventionally, introduction of mobile robots (e.g., AGVs: Automated Guided Vehi cles, AMRs: Autonomous Mobile Robots) has been progressing in order to resolve labor s hortages in article transport in stores or distribution warehouses, or in inter-process tra nsport in factories.

An AGV is a mobile robot that transports an article by guided traveling in which the AGV travels along a fixed route set by a guide body on a floor surface, such as a m agnetic tape. On the other hand, an AMR is a mobile robot that does not require a guid e body on a floor surface, estimates its own position by sensing technology or the like, a utomatically calculates a route to a destination, and travels autonomously.

An AMR has a SLAM (Simultaneous Localization and Mapping) function, and esti mates its own position on a mobile body facility map while generating the surrounding m obile body facility map while measuring distances to walls or pillars with, for example, a laser range finder mounted on the AMR, that is, while sensing a surrounding movement environment (site). Therefore, the AMR can travel (move) to the destination while automa tically searching for a route.

Patent Literature 1 discloses a route estimation system configured to set, in a ca se where passages in a warehouse are formed in a lattice shape and a plurality of AMRs cannot pass simultaneously on each passage segment connecting adjacent nodes (intersec tions), an optimal route between two points (a current location and a destination) on the passages in the warehouse from among a plurality of route candidates.

### Citation List

### Patent Literature

[Patent Literature 1] Japanese Patent Laid-Open No. 2020-46384

### Summary of Invention

### Technical Problem

However, depending on a movement environment (e.g., a retail store) of an AMR ( autonomous mobile body), a layout change (e.g., movement of product shelves in the reta il store) may be performed frequently. In this case, the autonomous mobile body needs t o newly generate a mobile body facility map every time the layout change is performed, a nd there is a problem that a generation cost of the mobile body facility map by the auto nomous mobile body increases.

Specifically describing the above problem, in order for the autonomous mobile bo dy to generate the mobile body facility map used for the autonomous movement control o f the autonomous mobile body, it is a prerequisite to acquire high-definition two-dimensi onal/three-dimensional data representing the surrounding movement environment by sens ing. Therefore, a control unit (CPU) of the autonomous mobile body that performs proce ssing of generating the mobile body facility map using a large amount of two-dimensional /three-dimensional data due to the high definition is required to have very high-speed pr ocessing performance, and as a result, the generation cost of the mobile body facility ma p increases.

An object of the present invention is to provide a map generation device, a map generation method, and a map generation system capable of reducing a generation cost o f a mobile body facility map used for autonomous movement control of an autonomous m obile body.

### Solution to Problem

A map generation device according to the present invention comprises: a passage identifying unit; and a mobile body facility map data generation unit, wherein the passag e identifying unit is configured to identify a passage in which an autonomous mobile bod y is movable in a facility by executing data processing on drawing data representing a co nstruction drawing of the facility, and the mobile body facility map data generation unit is configured to generate mobile body facility map data representing a mobile body facilit y map used for autonomous movement control of the autonomous mobile body in the faci lity, the mobile body facility map including the identified passage and a point on the pas sage.

According to the present invention, it is possible to reduce a generation cost of a mobile body facility map used for autonomous movement control of an autonomous mobil e body.

### Brief Description of Drawings

FIG. 1 is a diagram illustrating a configuration example of a map generation syst em in the present embodiment.
FIG. 2 is a diagram illustrating a functional configuration example of a map gene ration device in the present embodiment.
FIG. 3 is a diagram illustrating a functional configuration example of an autonom ous mobile body in the present embodiment.
FIG. 4 is a diagram illustrating an example of a construction drawing in the pres ent embodiment.
FIG. 5 is a diagram illustrating an example of identifying a passage in which an autonomous mobile body is movable in a facility corresponding to a construction drawing .
FIG. 6 is a diagram illustrating an example of searching for a route from a depar ture place to a destination of an autonomous mobile body.
FIG. 7 is a diagram illustrating an example of searching for a route from a depar ture place to a destination of an autonomous mobile body.
FIG. 8 is a diagram illustrating an example of autonomous movement control by an autonomous mobile body.
FIG. 9 is a flowchart illustrating an example of a map generation process perfor med by a map generation device.
FIG. 10 is a flowchart illustrating an example of an autonomous movement contr ol process performed by an autonomous mobile body.
FIG. 11 is a diagram illustrating an example of adding a point to a position coor dinate of a shelf in a mobile body facility map.

### Description of Embodiments

Embodiments of the present invention will be described with reference to the acc ompanying drawings. In each figure, components denoted by the same reference numeral s have the same or similar configurations.

### (Configuration of Map Generation System 1)

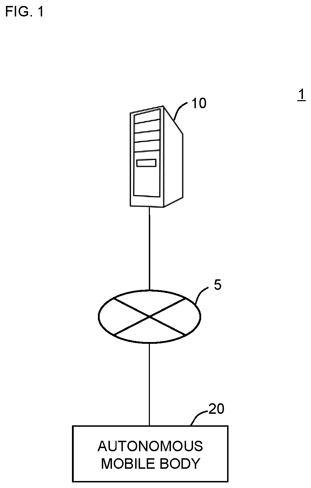

FIG. 1 shows a configuration of a map generation system 1 in the present embod iment. The map generation system 1 is a system configured to generate mobile body faci lity map data used for autonomous movement control of an autonomous mobile body 20. As shown in FIG. 1, the map generation system 1 comprises a map generation device 10 and the autonomous mobile body 20. The map generation device 10 and the autonomou s mobile body 20 are communicably connected to each other via a communication line 5. Note that the number of autonomous mobile bodies 20 included in the map generation s ystem 1 is not limited to one, and the map generation system 1 may include two or mor e autonomous mobile bodies 20.

The communication line 5 is typically a communication network including the Int ernet. The communication line 5 is typically a communication network including a WAN (Wide Area Network). The communication line 5 may be a communication network includ ing a private network such as an intranet. The communication line 5 may be a commun ication network including a LAN (Local Area Network). Further, the communication line 5 may be a wireless line or a wired line, or a mixture of a wireless line and a wired line . Further, the communication line 5 may be a communication network including a dedic ated line or a public mobile telephone network.

The map generation device 10 performs generation of the mobile body facility ma p data, transmission of the generated mobile body facility map data to the autonomous mobile body 20, and the like. The map generation device 10 is an information processin g terminal such as a personal computer (PC) or a notebook PC, and provides a map gene ration service to a user. The user can log in to the map generation service and receive provision of the map generation service by operating the map generation device 10.

Note that the map generation device 10 may be any terminal such as a mobile p hone, a smartphone, a tablet terminal, a PDA (Personal Digital Assistant), or a home ga me machine. Further, the map generation device 10 may be composed of one or a plura lity of information processing devices, or may be composed using a virtual server (such a s a cloud server).

The autonomous mobile body 20 is a mobile body that moves (travels) autonomou sly without requiring a driving operation by the user. The autonomous mobile body 20 i s, for example, an autonomous traveling vehicle or an autonomous mobile robot. In the present embodiment, an example will be described in which an autonomous mobile robot that transports a transport object (cargo) in, for example, a store or a distribution wareh ouse is used as the autonomous mobile body 20.

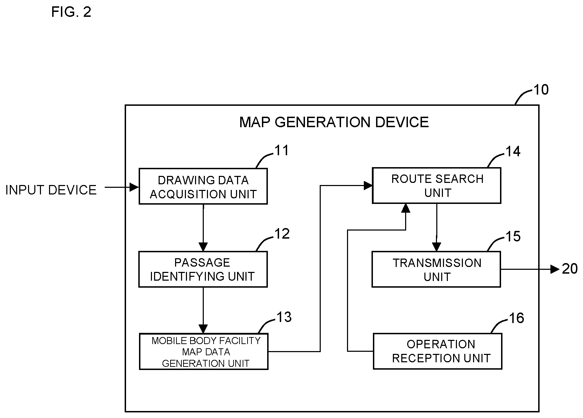

FIG. 2 is a diagram illustrating a configuration of the map generation device 10 i n the present embodiment. As shown in FIG. 2, the map generation device 10 is configu red to comprise a drawing data acquisition unit 11, a passage identifying unit 12, a mob ile body facility map data generation unit 13, a route search unit 14, a transmission uni t 15, and an operation reception unit 16.

Each component of the map generation device 10 may be realized by software or may be realized by hardware. In the case of realization by software, various functions c an be realized by a CPU executing a computer program. The program may be stored in a built-in storage unit, or may be stored in a non-transitory computer-readable recording medium. Alternatively, a program stored in an external storage unit may be read out an d realized by so-called cloud computing. In the case of realization by hardware, it can b e realized by various circuits such as an ASIC, an FPGA, or a DRP (Dynamically Reconfig urable Processor). In the present embodiment, various information and concepts encomp assing the same are handled, and these are represented by high and low signal values a s a binary bit aggregate composed of 0 or 1, and communication and calculation can be executed by the above-described software or hardware aspects.

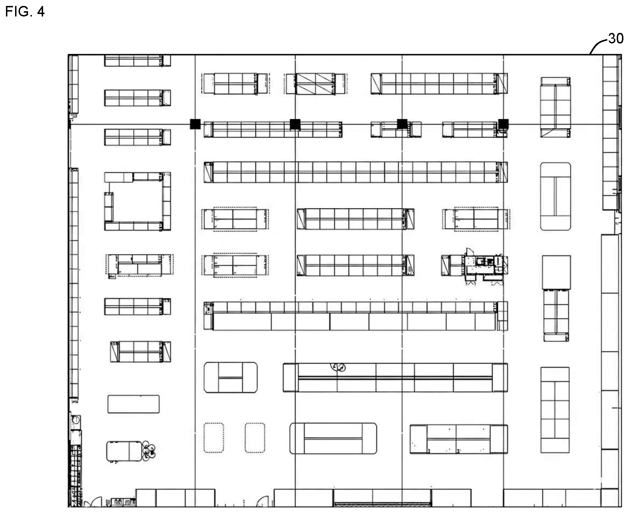

The drawing data acquisition unit 11 acquires drawing data (e.g., CAD data) repr esenting a construction drawing of a facility (e.g., a retail store, a warehouse, a factory) from an input device (not shown) and outputs the drawing data to the passage identifyin g unit 12. Here, the construction drawing is a drawing necessary for performing on-site construction in facility work, and is created based on, for example, a design drawing of a survey site created with three-dimensional CAD data of an absolute coordinate system. FIG. 4 is a diagram illustrating an example of a construction drawing 30 in the present embodiment.

Note that the input device is an information processing device (e.g., a personal c omputer), and is configured to be capable of outputting various data such as drawing da ta.

The passage identifying unit 12 identifies a passage (also referred to as a link) in which the autonomous mobile body 20 is movable in the facility by executing data proce ssing on the drawing data output from the drawing data acquisition unit 11. For examp le, the passage identifying unit 12 identifies a passage having a road width equal to or l arger than a threshold value (a value larger than a width of the autonomous mobile body 20) as the passage in which the autonomous mobile body 20 is movable. The passage id entifying unit 12 outputs the drawing data output from the drawing data acquisition unit 11 and passage data representing the passage in which the autonomous mobile body 20 is movable to the mobile body facility map data generation unit 13.

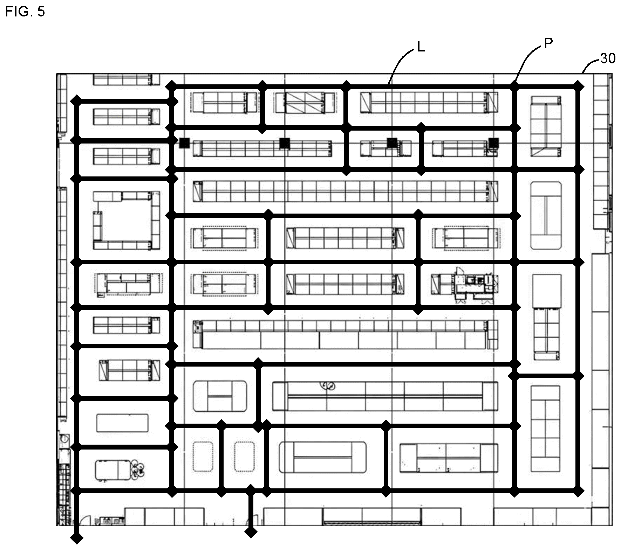

FIG. 5 is a diagram illustrating an example of identifying the passage in which t he autonomous mobile body 20 is movable in the facility corresponding to the constructi on drawing. As shown in FIG. 5, on the construction drawing, the passage L identified by the passage identifying unit 12, and a point P on the passage L (also referred to as a node; e.g., a point representing an intersection point, a corner point, a dead-end point, a point arbitrarily set by the user, or the like) are represented.

Based on the drawing data and the passage data output from the passage identif ying unit 12, the mobile body facility map data generation unit 13 generates mobile body facility map data representing a mobile body facility map used for autonomous movement control of the autonomous mobile body 20 in the facility, the mobile body facility map in cluding the passage (travel path, link) identified by the passage identifying unit 12 and t he point (node) on the passage. Then, the mobile body facility map data generation unit 13 outputs the generated mobile body facility map data to the route search unit 14. He re, the mobile body facility map is also referred to as a mobile body travel path map or a passage connection map (link map), and is a map representing the passage in which t he autonomous mobile body 20 is movable in the facility in a simplified manner. Since this map is generated based on the drawing data representing the construction drawing o f the facility, accuracy of distances between respective points is ensured.

The operation reception unit 16 receives an operation performed by the user rega rding use of the map generation device 10. For example, the operation reception unit 16 receives an operation of setting a departure place where the autonomous mobile body 20 starts moving in the facility and a destination where the autonomous mobile body 20 en ds moving, on the mobile body facility map represented by the mobile body facility map data generated by the mobile body facility map data generation unit 13. In this case, th e operation reception unit 16 outputs operation data representing the operation of setting the departure place and the destination to the route search unit 14. As the departure p lace, for example, a delivery base of merchandise is set. As the destination, for example, a delivery destination of merchandise (e.g., a product shelf) is set.

Based on the mobile body facility map data output from the mobile body facility map data generation unit 13 and the operation data output from the operation reception unit 16, the route search unit 14 searches for a route from the departure place to the d estination of the autonomous mobile body 20 as a route along which the autonomous mo bile body 20 is scheduled to move. Then, the route search unit 14 outputs the mobile b ody facility map data output from the mobile body facility map data generation unit 13 a nd route data representing the searched route to the transmission unit 15. For example, the route search unit 14 sequentially calculates (accumulates) costs of passages (links) to intersections (nodes) that can be reached next from the departure place toward the desti nation, and selects a route having a minimum total cost from the departure place to the destination or a route satisfying a predetermined condition. The route data representing the searched route is very simple data obtained by connecting a plurality of passages fro m the departure place to the destination. As a route search method used by the route s earch unit 14, for example, Dijkstra's algorithm, A* algorithm, genetic algorithm, or the l ike can be used.

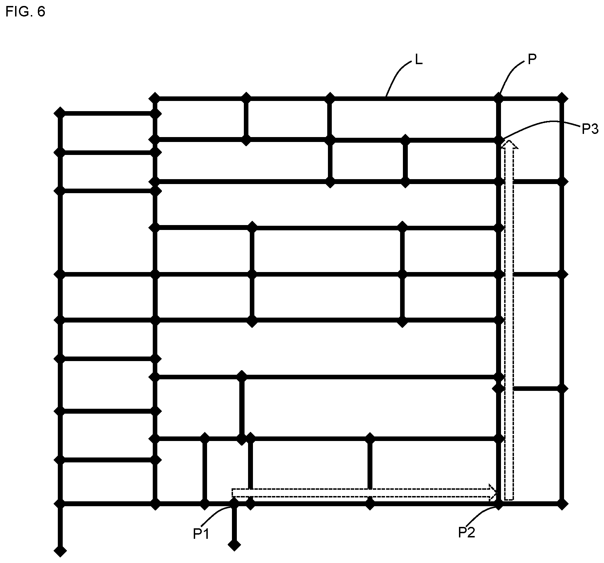

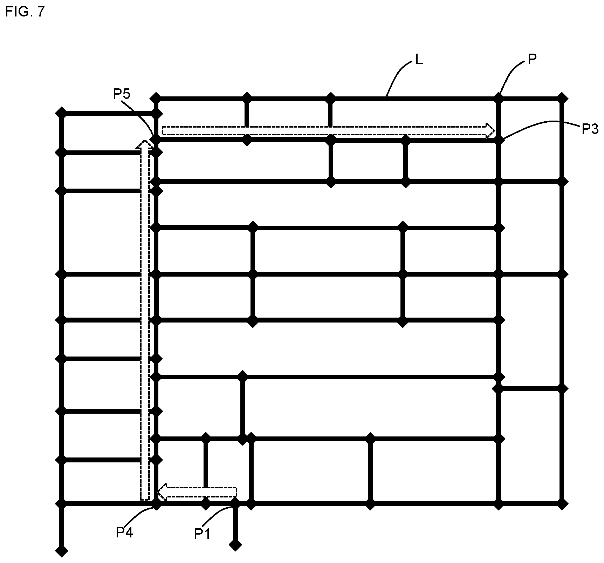

FIGS. 6 and 7 are diagrams illustrating examples of searching for the route from the departure place to the destination of the autonomous mobile body 20. As shown in FIG. 6, the route search unit 14 searches for a route from the departure place (point P1) of the autonomous mobile body 20 via a waypoint (point P2) to the destination (point P3) as the route (indicated by an arrow in the figure) along which the autonomous mobile bo dy 20 is scheduled to move. Also, as shown in FIG. 7, the route search unit 14 searche s for a route from the departure place (point P1) of the autonomous mobile body 20 via waypoints (points P4, P5) to the destination (point P3) as the route (indicated by an arro w in the figure) along which the autonomous mobile body 20 is scheduled to move. The n, the route search unit 14 selects one of the two routes described with reference to FIG S. 6 and 7 that has a minimum total cost required from the departure place (point P1) t o the destination (point P3).

Note that the route search unit 14 may calculate the cost of the passage based o n a population density in the facility. For example, the route search unit 14 may perfor m weighting such that the cost increases for a passage where the population density in t he facility is equal to or larger than a threshold value. Thereby, it is possible to ensure that the autonomous mobile body 20 moves in a passage with few people. Further, the route search unit 14 may calculate the cost of the passage based on a required time for moving through the passage, a passage condition (e.g., presence or absence of an obstacl e or a slope), or a passage width.

The transmission unit 15 transmits the mobile body facility map data and the ro ute data output from the route search unit 14 to the autonomous mobile body 20 using an MQTT (Message Queuing Telemetry Transport) protocol which is a low-capacity commu nication method used in the IoT field in recent years. In the present embodiment, the m obile body facility map data and the route data are composed of simple text data. There fore, the transmission unit 15 can transmit the mobile body facility map data and the ro ute data to the autonomous mobile body 20 as low-capacity data.

### (Configuration of Autonomous Mobile Body 20)

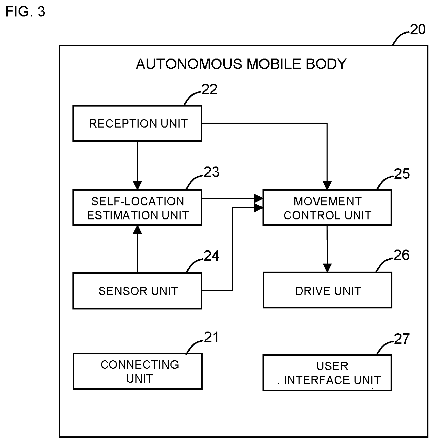

FIG. 3 is a diagram illustrating a configuration of the autonomous mobile body 2 0 in the present embodiment. As shown in FIG. 3, the autonomous mobile body 20 is c onfigured to comprise a connecting unit 21, a reception unit 22, a self-location estimatio n unit 23, a sensor unit 24, a movement control unit 25, a drive unit 26, and a user in terface unit 27. FIG. 3 is a diagram illustrating a configuration of the autonomous mobile body 20 in the present embodiment. As shown in FIG. 3, the autonomous mobile body 20 is configured to comprise a connecting unit 21, a reception unit 22, a self-location es timation unit 23, a sensor unit 24, a movement control unit 25, a drive unit 26, and a user interface unit 27.

Each component of the autonomous mobile body 20 may be realized by software or may be realized by hardware. In the case of realization by software, various functions can be realized by a CPU executing a computer program. The program may be stored in a built-in storage unit, or may be stored in a non-transitory computer-readable recording medium. Alternatively, a program stored in an external storage unit may be read out an d realized by so-called cloud computing. In the case of realization by hardware, it can b e realized by various circuits such as an ASIC, an FPGA, or a DRP. In the present emb odiment, various information and concepts encompassing the same are handled, and thes e are represented by high and low signal values as a binary bit aggregate composed of 0 or 1, and communication and calculation can be executed by the above-described softwar e or hardware aspects.

The connecting unit 21 connects the transport object (cargo) to the autonomous mobile body 20 at an upper part of the autonomous mobile body 20. n the present emb odiment, from a viewpoint of enabling the autonomous mobile body 20 to suitably transp ort a heavy object such as a transport cart heavier than the autonomous mobile body 20 as the transport object, the connecting unit 21 comprises a pressurizing unit for applyin g a constant load from the transport object to the autonomous mobile body 20. Further, in order to enable the autonomous mobile body 20 to make a small turn while transporti ng the heavy object in the facility, the connecting unit 21 comprises a rotation mechanis m. Thereby, the autonomous mobile body 20 can move in a narrow passage while suppr essing a rotational load generated on itself to a minimum when making the small turn w hile transporting the heavy object.

The drive unit 26 is configured to comprise a plurality of (e.g., three or four) dri ve wheels (e.g., tires, not shown) provided at a lower part of the autonomous mobile bod y 20, a rotation drive unit (e.g., a motor, not shown) for rotationally driving the plurality of drive wheels, a drive control unit (e.g., a motor driver, not shown) for controlling the rotation drive unit, and a battery (not shown) for supplying electric power to the rotation drive unit and the drive control unit.

The sensor unit 24 comprises an inertial measurement unit (IMU: Inertial Measur ement Unit, not shown), a two-dimensional laser ranging sensor (not shown), and a stere o camera (not shown).

The inertial measurement unit detects three-dimensional inertial motion (translati onal motion and rotational motion in three orthogonal axis directions) of the autonomous mobile body 20. A detection result of the inertial measurement unit can be used for atti tude control of the autonomous mobile body 20.

The two-dimensional laser ranging sensor recognizes a person, a fixed object (e.g. , a product shelf), an object (e.g., an obstacle), or the like existing in the passage in whi ch the autonomous mobile body 20 is moving in the facility, and outputs recognition res ult data indicating a recognition result to the movement control unit 25.

The stereo camera is a camera for VSLAM (Visual SLAM) including, for example, a CMOS image sensor or the like and capable of capturing an image of a surrounding en vironment of the autonomous mobile body 20, and outputs an imaging result to the self-l ocation estimation unit 23.

The reception unit 22 receives the mobile body facility map data and the route d ata transmitted from the transmission unit 15 of the map generation device 10. Then, t he reception unit 22 outputs the received mobile body facility map data and route data t o the self-location estimation unit 23 and the movement control unit 25.

The self-location estimation unit 23 estimates a moving direction and a moving di stance of the autonomous mobile body 20 in the mobile body facility map represented by the mobile body facility map data, and estimates a self-location (position of the autonom ous mobile body 20) on the mobile body facility map. Then, the self-location estimation unit 23 outputs self-location data indicating the estimated self-location on the mobile bo dy facility map to the movement control unit 25. Regarding the estimation of the self-lo cation, the position of the autonomous mobile body 20 in the mobile body facility map c an be estimated from an integration result of movement distances obtained by determinin g a movement amount from a preset known place from calculation of rotation angles of t he drive wheels and steering of the drive unit 26 based on a known odometry technique. Further, as supplementary data for estimating the self-location, a mark installed on the passage such as a beacon or a marker may be used. Further, the self-location estimatio n unit 23 may estimate the self-location (position of the autonomous mobile body 20) on the mobile body facility map by calculating a movement displacement of the autonomous mobile body 20 from a moving image captured by the stereo camera (VSLAM camera) usi ng a known visual odometry technique.

Based on the mobile body facility map data and the route data output from the r eception unit 22, the self-location data from the self-location estimation unit 23, and the recognition result data output from the two-dimensional laser ranging sensor, the movem ent control unit 25 controls operation of the drive unit 26 so that the autonomous mobil e body 20 recognizes an obstacle (person or object) randomly occurring in the facility an d suitably moves from the departure place to the destination on the mobile body facility map while performing temporary stop or avoidance of the obstacle.

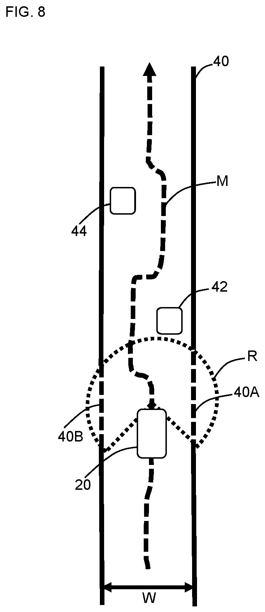

FIG. 8 is a diagram illustrating an example of autonomous movement control by the autonomous mobile body 20. As shown in FIG. 8, the movement control unit 25 of t he autonomous mobile body 20 recognizes obstacles 42 and 44 (people or objects) rando mly occurring within a passage 40 of the facility, and controls the operation of the drive unit 26 so that the autonomous mobile body 20 can suitably move from the departure pl ace to the destination on the mobile body facility map while performing temporary stop o r avoidance of the obstacles 42 and 44. In FIG. 8, W indicates a width of the passage 4 0 in which the autonomous mobile body 20 moves. Further, M indicates a target route when the autonomous mobile body 20 moves to the destination on the mobile body facilit y map while avoiding the obstacles 42 and 44. Further, R indicates a recognizable range (sensor range) by the two-dimensional laser ranging sensor, and the sensor range include s passage walls 40A and 40B constituting a part of the passage 40.

The user interface unit 27 performs a collision warning operation or a safety ens uring operation for the user (e.g., a shopper, a worker) by outputting information by sou nd, light, or the like in the facility (e.g., a retail store). Further, the user interface unit 27 can also perform a reaction operation (interaction operation with the outside) to a use r operation performed on the autonomous mobile body 20.

### (Map Generation Process Performed by Map Generation Device 10)

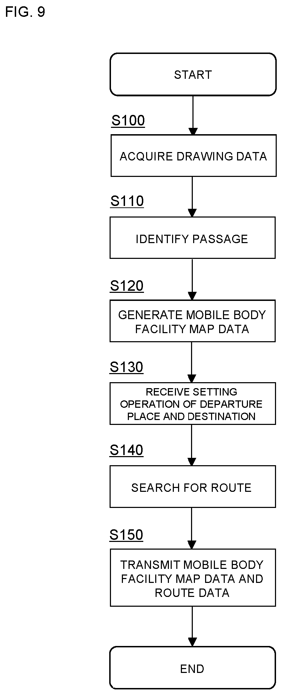

FIG. 9 is a flowchart illustrating an example of a map generation process perfor med by the map generation device 10 in the present embodiment.

First, the drawing data acquisition unit 11 acquires drawing data (e.g., CAD data ) representing a construction drawing of a facility (e.g., a retail store, a warehouse, a fac tory) from an input device (not shown) and outputs the drawing data to the passage iden tifying unit 12 (Step S100).

Next, the passage identifying unit 12 identifies a passage (also referred to as a li nk) in which the autonomous mobile body 20 is movable in the facility by executing data processing on the drawing data output from the drawing data acquisition unit 11 (Step S 110). Then, the passage identifying unit 12 outputs the drawing data output from the d rawing data acquisition unit 11 and passage data representing the passage in which the autonomous mobile body 20 is movable to the mobile body facility map data generation unit 13.

Next, based on the drawing data and the passage data output from the passage i dentifying unit 12, the mobile body facility map data generation unit 13 generates mobile body facility map data representing a mobile body facility map used for autonomous mov ement control of the autonomous mobile body 20 in the facility, the mobile body facility map including the passage (link) identified by the passage identifying unit 12 and the po int (node) on the passage (Step S120). Then, the mobile body facility map data generatio n unit 13 outputs the generated mobile body facility map data to the route search unit 14.

Next, the operation reception unit 16 receives an operation of setting a departure place where the autonomous mobile body 20 starts moving in the facility and a destinati on where the autonomous mobile body 20 ends moving, on the mobile body facility map represented by the mobile body facility map data generated by the mobile body facility m ap data generation unit 13 (Step S130). Then, the operation reception unit 16 outputs o peration data representing the operation of setting the departure place and the destinatio n to the route search unit 14.

Next, based on the mobile body facility map data output from the mobile body fa cility map data generation unit 13 and the operation data output from the operation rece ption unit 16, the route search unit 14 searches for a route from the departure place to the destination of the autonomous mobile body 20 as a route along which the autonomo us mobile body 20 is scheduled to move (Step S140). Then, the route search unit 14 ou tputs the mobile body facility map data output from the mobile body facility map data ge neration unit 13 and route data representing the searched route to the transmission unit 15.

Finally, the transmission unit 15 transmits the mobile body facility map data an d the route data output from the route search unit 14 to the autonomous mobile body 2 0 (Step S150). Upon completion of the process of Step S150, the map generation device 10 ends the process shown in FIG. 9.

### (Autonomous Movement Control Process Performed by Autonomous Mobile Body 20)

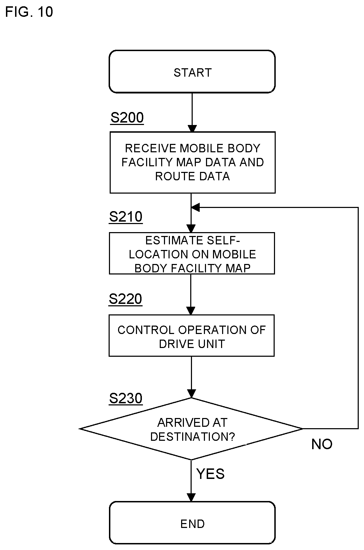

FIG. 10 is a flowchart illustrating an example of an autonomous movement contr ol process performed by the autonomous mobile body 20 in the present embodiment. No te that Step S200 is executed after the mobile body facility map data and the route data are transmitted from the transmission unit 15 to the autonomous mobile body 20 in Ste p S150 of FIG. 9.

First, the reception unit 22 receives the mobile body facility map data and the ro ute data transmitted from the transmission unit 15 of the map generation device 10 (Ste p S200). Then, the reception unit 22 outputs the received mobile body facility map data and route data to the self-location estimation unit 23 and the movement control unit 25.

Next, the self-location estimation unit 23 estimates a moving direction and a mov ing distance of the autonomous mobile body 20 in the mobile body facility map represent ed by the mobile body facility map data, and estimates a self-location (position of the au tonomous mobile body 20) on the mobile body facility map (Step S210). Then, the self-lo cation estimation unit 23 outputs self-location data indicating the estimated self-location on the mobile body facility map to the movement control unit 25.

Next, based on the mobile body facility map data and the route data output from the reception unit 22, the self-location data from the self-location estimation unit 23, an d the recognition result data output from the two-dimensional laser ranging sensor, the movement control unit 25 controls operation of the drive unit 26 so that the autonomous mobile body 20 recognizes an obstacle (person or object) randomly occurring in the facilit y and suitably moves from the departure place to the destination on the mobile body faci lity map while performing temporary stop or avoidance of the obstacle (Step S220).

Finally, based on the self-location data from the self-location estimation unit 23, the movement control unit 25 determines whether or not the self-location (position of the autonomous mobile body 20) on the mobile body facility map is the destination, that is, whether or not the autonomous mobile body 20 has reached the destination (Step S230). As a result of the determination, if the autonomous mobile body 20 has not reached the target point (Step S230, NO), the process returns to before Step S210. On the other ha nd, if the autonomous mobile body 20 has reached the destination (Step S230, YES), the autonomous mobile body 20 ends the process shown in FIG. 10.

As described in detail above, in the present embodiment, the map generation device 10 comprises the passage identifying unit 12 and the mobile body facility map data generation unit 13. The passage identifying unit 12 identifies a passage in which the autonomous mobile body 20 is movable in the facility by executing data processing on drawing data representing a construction drawing of the facility. The mobile body facility map data generation unit 13 generates mobile body facility map data representing a mobile body facility map used for autonomous movement control of the autonomous mobile body 20 in the facility, the mobile body facility map including the identified passage and a point on the passage.

According to the present embodiment configured as described above, generation o f the mobile body facility map by the map generation device 10 becomes possible as long as there is the drawing data representing the construction drawing of the facility, and th erefore, even in a case where layout change (e.g., movement of product shelves in a retai l store) is performed frequently, it becomes unnecessary for the autonomous mobile body 20 to newly generate the mobile body facility map every time the layout change is perfor med. As a result, very high-speed processing performance is not required for the control unit (CPU) of the autonomous mobile body 20 in order to perform the processing of gene rating the mobile body facility map, and consequently, a generation cost of the mobile bo dy facility map by the autonomous mobile body 20 can be reduced.

Note that in the above embodiment, the route search unit 14 of the map generati on device 10 may search for the route from the departure place to the destination of the autonomous mobile body 20 in real time while the autonomous mobile body 20 is moving . Further, the route from the departure place to the destination of the autonomous mob ile body 20 may be searched for in the autonomous mobile body 20 instead of the map g eneration device 10.

Further, in the above embodiment, the autonomous mobile body 20 may be provi ded with various functions other than the function of transporting the transport object (c argo); for example, when the facility is a retail store, on condition that it can be fixed to the connecting unit 21, a camera unit for imaging shelves (e.g., product shelves) existing around the autonomous mobile body 20 or the surroundings thereof, a creation (e.g., an image character, a guide object) for performing sales promotion of merchandise or sales f loor guidance, a monitor such as a touch panel, or the like may be installed.

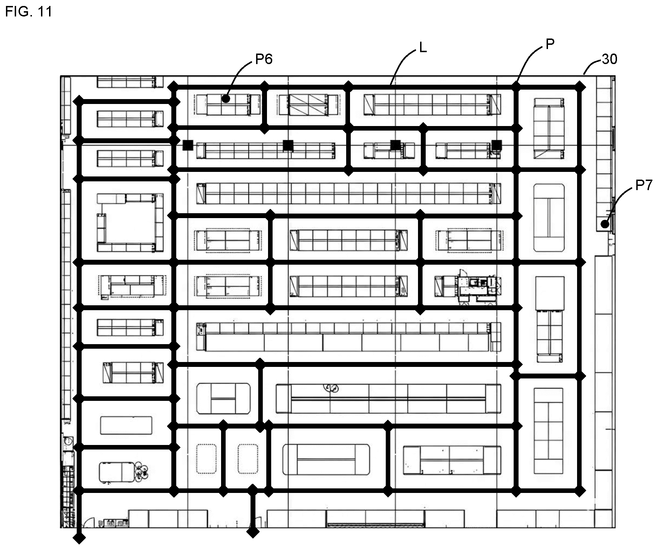

Further, in the above embodiment, a point (point) that does not exist on the pas sage identified by the passage identifying unit 12 may be provided in the mobile body fa cility map. For example, as shown in FIG. 11, when the facility is a retail store, points may be added to position coordinates P6 and P7 of shelves (e.g., product shelves) in the mobile body facility map, and shelf information (e.g., a shelf number, a merchandise JAN code, a merchandise category, etc.) managed by the retail store may be registered in ass ociation with the points. In this case, the user (operator) may set a product shelf identi fied by the shelf number, which is an example of the shelf information, as the destinatio n, and instruct the autonomous mobile body 20 to travel to the vicinity of the product s helf. The autonomous mobile body 20 may estimate the self-location (position of the aut onomous mobile body 20) on the mobile body facility map by reading the shelf number a ttached to the product shelf with a sensing function by the sensor unit 24.

Further, the above embodiments are merely examples of specific implementation f or carrying out the present invention, and the technical scope of the present invention s hould not be construed in a limited manner by these. That is, the present invention ca n be implemented in various forms without departing from the gist or main features ther eof.

### Reference Signs List

1: map generation system, 5: communication line, 10: map generation device, 11: drawing data acquisition unit, 12: passage identifying unit, 13: mobile body facility map data generation unit, 14: route search unit, 15: transmission unit, 16: operation reception unit, 20: autonomous mobile body, 21: connecting unit, 22: reception unit, 23: self-location estimation unit, 24: sensor unit, 25: movement control unit, 26: drive unit, 27: user interface unit, 30: construction drawing, 40: passage, 40A, 40B: passage wall, 42, 44: obstacle, L: passage, P, P1, P2, P3, P4, P5: point, P6, P7: position coordinate, R: sensor range, M: target route

## Claims

1. A map generation device comprising:
a passage identifying unit; and
a mobile body facility map data generation unit, wherein
the passage identifying unit is configured to identify a passage in which an autonomous mobile body is movable in a facility by executing data processing on drawing data representing a construction drawing of the facility, and
the mobile body facility map data generation unit is configured to generate mobile body facility map data representing a mobile body facility map used for autonomous movement control of the autonomous mobile body in the facility, the mobile body facility map including the identified passage and a point on the passage.

2. A map generation method, wherein
a processor identifies a passage in which an autonomous mobile body is movable in a facility by executing data processing on drawing data representing a construction drawing of the facility, and
the processor generates mobile body facility map data representing a mobile body facility map used for autonomous movement control of the autonomous mobile body in the facility, the mobile body facility map including the identified passage and a point on the passage.

3. A map generation system comprising:
a passage identifying unit; and
a mobile body facility map data generation unit, wherein
the passage identifying unit is configured to identify a passage in which an autonomous mobile body is movable in a facility by executing data processing on drawing data representing a construction drawing of the facility, and
the mobile body facility map data generation unit is configured to generate mobile body facility map data representing a mobile body facility map used for autonomous movement control of the autonomous mobile body in the facility, the mobile body facility map including the identified passage and a point on the passage.
